# EUROPEAN PATENT APPLICATION

(11) **EP 2 706 430 A2**
(43) Date of publication of application: **12.03.2014**
(21) Application number: 13182347.8
(22) Date of filing: 30.08.2013
(51) Int. Cl.: G06F 1/20, G06F 1/16

(54) **Portable computer having heat dissipation structure**

(30) Priority: 05.09.2012 KR 20120098270
(71) Applicant: Bluebird Inc., Seoul 135-856 (KR)
(72) Inventor: Lee, Jang Won, Seoul (KR); Choi, Won Seok, Gyeonggi-do (KR)
(74) Representative: Groth & Co. KB

(57) **Abstract**

A portable computer having a heat dissipation structure includes a main body in which a heat generation device generating heat is arranged, wherein a sealed space that is sealed to prevent intrusion of external water and an exposed space into which external air is taken, a heat transfer unit connected to the heat generation device and extended to the exposed space in the sealing space of the main body and transferring the heat of the heat generation device to the exposed space, and a heat dissipation unit arranged in the exposed space of the main body and dissipating the heat transferred by the heat transfer unit. The intrusion of water into the main body may be prevented and simultaneously the heat generated by the heat generation devices may be efficiently dissipated. Thus, the portable computer may be used even in an inferior outdoor environment during rain.

## Description

### CROSS-REFERENCE TO RELATED APPLICATIONS

This application claims the benefit of Korean Patent Application No. 10-2012-0098270, filed on September 05, 2012, in the Korean Intellectual Property Office, the disclosure of which is incorporated herein in its entirety by reference.

### BACKGROUND

The inventive concept relates to a portable computer having a heat dissipation structure, and more particularly, to a portable computer having a heat dissipation structure that may be used outdoors in an inferior environment such as rain.

In general, a portable computer is carried by a user to use while moving. Lap top computers (notebook computers) and tablet personal computers (PCs) are typical portable computers. In the following description, a tablet PC will be mainly discussed for convenience of explanation.

The tablet PC is a combination of performance of a notebook computer and portability of a personal digital assistant (PDA) and includes a display unit such as a liquid crystal display (LCD) or organic light emitting diode (OLED) and adopts an input method using a hand, a pen, or digital ink instead of a keyboard and a mouse.

The tablet PC is a personal computer mainly operated by using a touch screen and widely being used by students or businessmen due to its superior portability although convenience is use thereof is inferior compared to a netbook computer or a notebook computer.

The table PC is often used for purposes of briefly searching Internet, viewing a moving picture, reading, enjoying computer games, etc. by using a touch screen. Furthermore, the tablet PC is increasingly used for an educational use as an electron textbook.

The tablet PC includes a variety of parts such as a central processing unit (CPU) for controlling an overall calculation operation, a graphic card for processing a signal of an image or a video, a ROM BIOS for storing basic programs for booting a computer, etc., which are integrated on a main board at a high density in a case.

In case of the tablet PC, heat is generated from various parts mounted on the main board and driven. Particularly, a relatively large amount of heat is generated from the CPU that deals with various calculations and control. Also, as the performance of a graphic card is improved, a large amount of heat is generated from the graphic card.

As the amount of heat increase, functions of various parts arranged inside the tablet PC deteriorate and in a severe case the parts may be damaged by the generated heat. Accordingly, a heat dissipation structure for high heat parts is needed.

In a conventional tablet PC, to remove heat generated by heat generation apparatuses such as the CPU, the graphic card, etc., the heat generation apparatus and a heat dissipation apparatus including a heat pipe, and a blowing fan are all installed inside the tablet PC. Then, the heat conducted through the heat pipe connected to the heat generation apparatus is dissipated by using the blowing fan.

However, in the conventional tablet PC, since the blowing fan is driven to take air existing outside the tablet PC into the inside of the table PC, an opening for passing the external air is formed in a casing of the tablet PC.

Thus, when the conventional tablet PC is used outdoors during rain, rainwater may intrude into the inside of the tablet PC through the opening for passing the external air. As a result, a circuit board of the tablet PC may be wet and damaged.

### SUMMARY

The inventive concept provides a portable computer having a heat dissipation structure that may prevent intrusion of water into a main body and efficiently dissipate heat generated by a heat generation apparatus provided in the portable computer, thereby enabling an outdoor use in an inferior environment such as rain.

According to an aspect of the inventive concept, there is provided a portable computer having a heat dissipation structure, which includes a main body in which a heat generation device generating heat is arranged, wherein a sealed space that is sealed to prevent intrusion of external water and an exposed space into which external air is taken, a heat transfer unit connected to the heat generation device and extended to the exposed space in the sealing space of the main body and transferring the heat of the heat generation device to the exposed space, and a heat dissipation unit arranged in the exposed space of the main body and dissipating the heat transferred by the heat transfer unit.

The main body may include a lower main body, an upper main body detachably coupled to the lower main body, forming the sealed space, and a waterproof unit coupled to the lower main body and the upper main body and preventing intrusion of external water into the sealed space when the lower main body and the upper main body are coupled to each other.

The exposed space may be provided to be sunken from a lower surface of the lower main body by a predetermined depth, and the main body may further include a partition wall body that partitions the exposed space and the sealed space.

The partition wall body may be formed on the lower main body.

The waterproof unit may include at least one of a waterproof tape coupled between the lower main body, the upper main body, and the heat transfer unit and a waterproof rubber of a rubber material coupled between the lower main body, the upper main body, and the heat transfer unit.

The heat dissipation unit may include a heat sink connected to the heat transfer unit and having at least one of heat dissipation members for receiving heat from the heat transfer unit and dissipating the heat to the outside.

The heat dissipation unit may further include a blowing unit including a blowing fan that is arranged in an area close to the heat sink and blows air to the heat sink to dissipate the heat transferred from the heat transfer unit to the heat sink to the outside.

The heat transfer unit may be a heat pipe connected to each of the heat generation device and the heat sink.

The portable computer may further include a drive motor providing power to the blowing fan, and a drive motor battery supplying electric power to the drive motor. The drive motor may be arranged in the exposed space and the drive motor battery is arranged in the sealed space.

The portable computer may further include a wire connecting the drive motor and the drive motor battery. The wire may be surrounded by a flexible tube having a tube shape to prevent water from contacting the wire.

The portable computer may further include a casing. At least one taking-in hole formed to have external air taken into the exposed space and at least one taking-out hole formed to have the external air taken into the exposed space taken to the outside may be formed in the casing.

The heat sink may be arranged at an edge side of the exposed space to facilitate the external air passing through the heat sink to be taken to the outside by the blowing unit.

The portable computer may be a tablet personal computer (PC).

The exposed space may be arranged at an edge side of the main body so that the air taken into the exposed space is easily taken to the outside.

### BRIEF DESCRIPTION OF THE DRAWINGS

Exemplary embodiments of the inventive concept will be more clearly understood from the following detailed description taken in conjunction with the accompanying drawings in which:

FIG. 1 is a front perspective view of a portable computer having a heat dissipation structure according to an exemplary embodiment of the present inventive concept;

FIG. 2 is an exploded perspective view of the portable computer having a heat dissipation structure of FIG. 1;

FIG. 3 is an exploded perspective view of the portable computer having a heat dissipation structure of FIG. 1, in which an upper main body and a lower main body are separated from each other;

FIG. 4 is an assembly perspective view of the portable computer having a heat dissipation structure of FIG. 1; and

FIG. 5 is a perspective view of the portable computer having a heat dissipation structure of FIG. 1 in which a casing is coupled to a main body.

### DETAILED DESCRIPTION OF THE EMBODIMENTS

The attached drawings for illustrating embodiments of the inventive concept are referred to in order to gain a sufficient understanding of the inventive concept and the merits thereof. Hereinafter, the inventive concept will be described in detail by explaining embodiments of the inventive concept with reference to the attached drawings. Like reference numerals in the drawings denote like elements.

Among may portable computers including lap top computers (notebook computers) and tablet personal computers (PCs), a tablet PC will be discussed in the following descriptions as a typical example of a portable computer 100 having a heat dissipation structure for convenience of explanation.

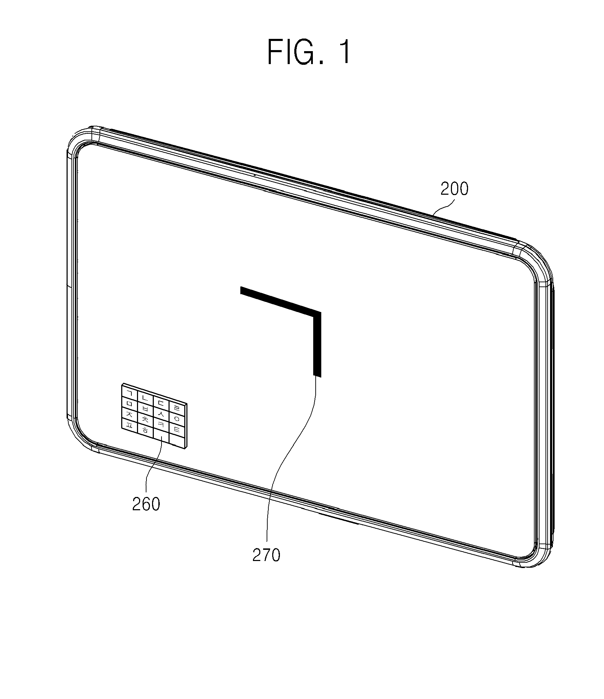

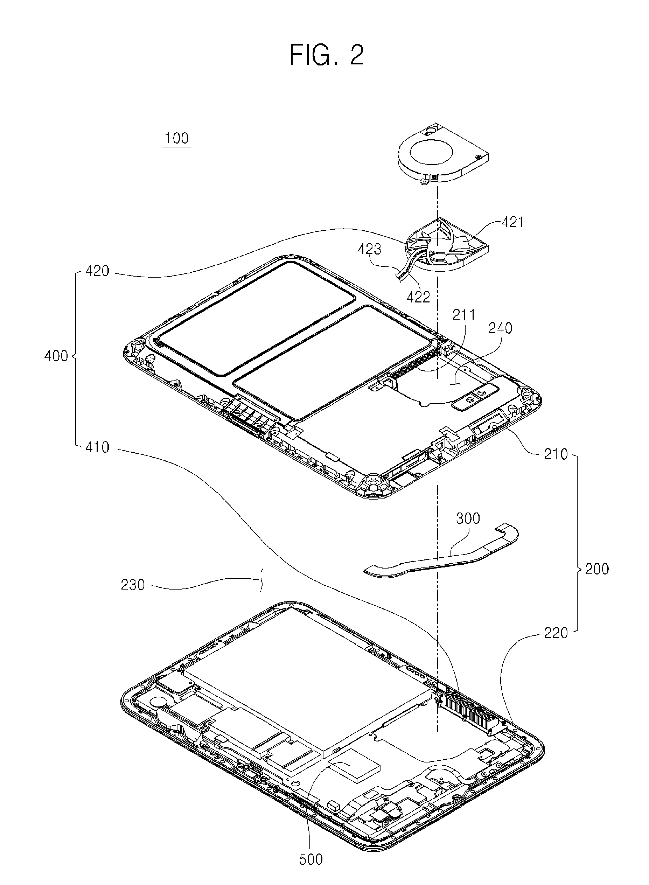

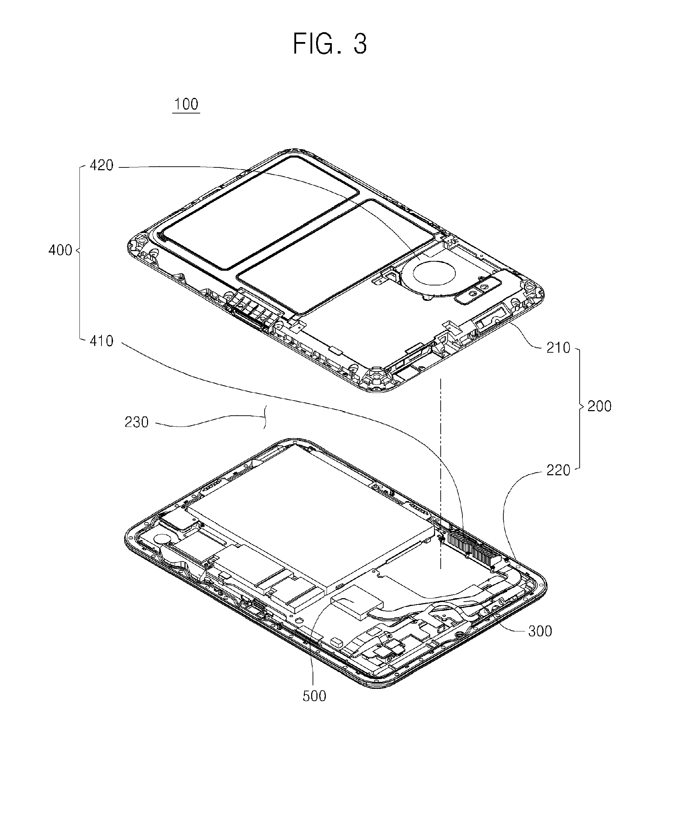

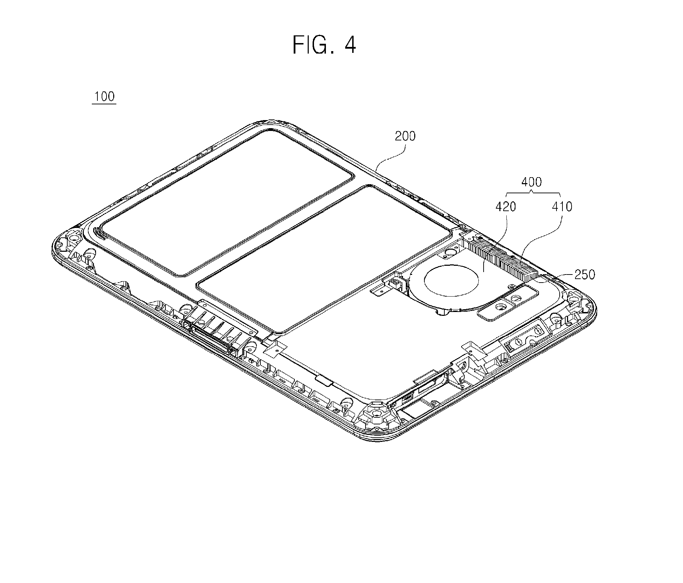

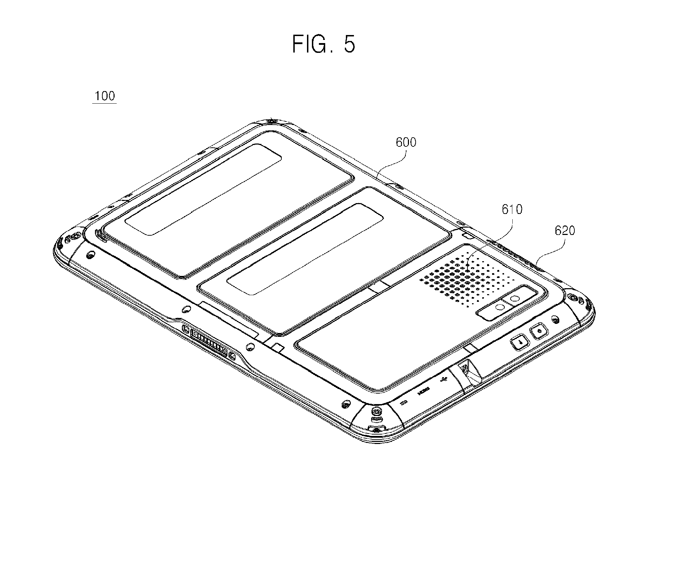

FIG. 1 is a front perspective view of the portable computer 100 having a heat dissipation structure according to an exemplary embodiment of the present inventive concept. FIG. 2 is an exploded perspective view of the portable computer 100 having a heat dissipation structure of FIG. 1. FIG. 3 is an exploded perspective view of the portable computer 100 having a heat dissipation structure of FIG. 1, in which an upper main body and a lower main body are separated from each other. FIG. 4 is an assembly perspective view of the portable computer 100 having a heat dissipation structure of FIG. 1. FIG. 5 is a perspective view of the portable computer 100 having a heat dissipation structure of FIG. 1 in which a casing is coupled to a main body.

As described in the above drawings, the portable computer 100 having a heat dissipation structure according to the present embodiment includes a main body 200, a heat transfer unit 300, and a heat dissipation unit 400. Referring to FIG. 1, the main body 200 is provided with an input unit 260 and an output unit 270. Referring to FIG. 2, the main body 200 includes a sealed space 230 and an exposed space 240.

For a tablet personal computer (PC), the input unit 260 is provided to input predetermined data mainly in a touch screen method and the output unit 270 is provided to output a result value corresponding to the data input through the input unit 260. In other words, a user may input data to the input unit 260 by using a finger or a touch pen and the date input to the input unit 260 is processed by various processing devices in the main body 200 and then a result corresponding to the input data is output through the output unit 270.

The sealed space 230, which is sealed to prevent intrusion of water thereinto, that is, to be waterproof, is provided in the main body 200. In other words, the main body 200 includes a lower main body 210 and an upper main body 220 so that they may be detachably assembled to each other. When the lower main body 210 and the upper main body 220 are assembled to each other, the sealed space 230 corresponds to an internal space of the main body 200 that is formed between the lower main body 210 and the upper main body 220.

The main body 200 may include a waterproof portion (not shown) that is coupled to the lower main body 210 and the upper main body 220. The waterproof portion prevents intrusion of water into the sealed space 230 that is formed as the lower main body 210 and the upper main body 220 are coupled to each other, that is, to waterproof the sealed space 230 when the lower main body 210 and the upper main body 220 are assembled to each other.

The heat transfer unit 300 and various heat generation devices 500 generating heat are arranged in the sealed space 230 that is waterproofed.

The waterproof portion is provided by a waterproof tape in the present embodiment so as to close a gap formed between the lower main body 210 and the upper main body 220. However, the present inventive concept is not limited thereto and the waterproof portion may be provided by a sealing member such as silicon, a waterproof rubber of a rubber material, etc.

The waterproof portion may include a waterproof unit 250 that closes a gap formed between the lower main body 210, an upper main body 220, and the heat transfer unit 300. In other words, when the lower main body 210 and the upper main body 220 are coupled to each other, the lower main body 210 and the upper main body 220 do not completely contact each other and thus a fine gap may be generated between the lower main body 210, the upper main body 220, and the heat transfer unit 300.

To prevent intrusion of water through such a gap, a waterproof tape is attached to cover the gap between the lower main body 210 and the upper main body 220. Also, the gap between the lower main body 210, an upper main body 220, and the heat transfer unit 300 is covered by adhering a waterproof tape on the gap.

Although the waterproof unit 250 is a waterproof tape in the present embodiment, the present inventive concept is not limited thereto and a sealing member such as silicon, a waterproof rubber of a rubber material, etc. may be used therefor.

Referring to FIGS. 2 and 3, the heat transfer unit 300 is connected to the heat generation devices 500 including a CPU or a graphic card and extended to the exposed space 240 so as to transfer the heat generated by the heat generation devices 500 to the heat dissipation unit 400 that is arranged in the exposed space 240.

The heat transfer unit 300 may be provided by a heat pipe that evaporates an operating liquid accommodated in the heat pipe and transfers heat in a form of a latent heat by sequentially performing evaporation and condensation of the operating liquid.

Since the operation principle or internal structure of the heat pipe are already well known and are not the main contents of the present inventive concept, detailed descriptions thereof will be omitted herein.

The main body 200 is provided with the exposed space 240 that is exposed to the outside so that external air may be taken in. The heat dissipation unit 400 may be arranged in the exposed space 240. The exposed space 240 is located in the lower main body 210 and may be an inner groove that is formed inwardly in the lower main body 210 to accommodate the heat dissipation unit 400. In other words, the exposed space 240 may be provided to be sunken from a lower surface of the lower main body 210 by a predetermined depth.

The main body 200 may further include a partition wall body 211 that partitions the exposed space 240 and the sealed space 230. In the present embodiment, the partition wall body 211 is formed on the lower main body 210 functioning as a surrounding wall of the exposed space 240 that is sunken. However, the present inventive concept is not limited thereto and the partition wall body 211 may be formed on the upper main body 220.

Referring to FIGS. 2 and 3, the heat dissipation unit 400 is provided to dissipate heat transferred from the heat transfer unit 300 to the exposed space 240 and may include a heat sink 410 and a blowing unit 420. The heat sink 410 is connected to the heat transfer unit 300 to dissipate heat transferred from the heat transfer unit 300 to the outside.

The heat sink 410 may be provided with at least one heat dissipation member for dissipating heat to the outside in order to improve a heat dissipation efficiency by increasing a heat contact area. When the heat dissipation member is provided in multiple numbers, the heat dissipation members may be arranged to be separated from each other. The heat dissipation members may have a variety of shapes, for example, a fin shape of a heat dissipation fin, a plate shape of a heat dissipation plate, etc.

Referring to FIGS. 2 to 4, the blowing unit 420 is arranged in an area close to the heat sink 410 to take external air into the exposed space 240 and blows the air toward the heat sink 410.

As the heat dissipation member provided in the heat sink 410 thermally contact the external air that is taken into the exposed space 240, the heat sink 410 is cooled and thus the heat transferred from the heat transfer unit 300 to the heat sink 410 may be dissipated to the outside.

As described above, in the portable computer 100 having a heat dissipation structure according to the present embodiment, since the sealed space 230 and the exposed space 240 are provided to be separated from each other, the heat generation devices 500 and the heat transfer unit 300 are arranged in the sealed space 230 that is waterproof, and the heat dissipation unit 400 including the heat sink 410 and the blowing unit 420 are arranged in the exposed space 240, the portable computer 100 may be used outdoors during rain.

For a conventional portable computer, all elements corresponding to not only the heat generation devices 500 and the heat transfer unit 300, but also the heat dissipation unit 400, are arranged inside the portable computer 100. In this case, external air is taken into the inside of the portable computer through an element corresponding to the blowing unit 420 to dissipate heat and then the external air inside the portable computer is exhausted to the outside. In other words, since the conventional portable computer has a structure in which the external air is taken into the inside of the portable computer and then exhausted to the outside of the portable computer, an opening for passing the external air in and out of the portable computer is formed in the conventional portable computer.

Accordingly, when the conventional portable computer is used outdoors during rain, rainwater intrudes in the portable computer through the opening formed therein for passing the external air, thereby damaging a circuit board and causing the portable computer to malfunction. In particular, when the portable computer is used under various outdoor working environments such as delivery business, shipbuilding industry, etc. as an industrial use, use of the conventional portable computer is limited during rain.

However, as described above, in the portable computer 100 having a heat dissipation structure according to the present embodiment, after a gap between the lower main body 210 and the upper main body 220 forming the sealed space 230 is waterproofed by using a waterproof tape, for example, the heat generation devices 500 and various circuit boards are arranged in the sealed space 230 and thus the intrusion of water into the sealed space 230 is prevented.

Also, the heat dissipation unit 400 is arranged in the exposed space 240 that is exposed to the external air and the heat sink 410 of the heat dissipation unit 400 is connected to the heat transfer unit 300, the heat generated by the heat generation devices 500 may be dissipated to the outside. In other words, unlike the conventional portable computer, in the portable computer 100 having a heat dissipation structure according to the present embodiment, air flow is not generated in the sealing space 230 whereas air flow is generated only in the exposed space 240.

In detail, the external air taken into the exposed space 240 by the blowing unit 420 is not moved to the sealed space 230 and is directly moved to the heat sink 410 to pass through the heat sink 410. The external air passing through the heat sink 410 has thermal exchange according to the thermal contact with the heat sink 410 and then is exhausted to the outside. As a result, the air is not taken into the sealed space 230 and air circulation occurs only in the exposed space 240.

Accordingly, no opening for taking the external air into the sealed space 230 is needed in the main body 200 and thus an opening through which water flows in does not exist. Also, since the main body 200 is waterproofed by using a waterproof tape, rainwater is prevented from intruding into the portable computer 100 during rain. Thus, the portable computer 100 having a heat dissipation structure according to the present embodiment may be used outdoors during rain. In particular, the portable computer 100 may have an effect of being sufficiently used as an industrial use in various outdoor working environments.

Referring to FIG. 2, in the present embodiment, the blowing unit 420 is a blowing fan 421 that is manufactured of various synthetic resins. As a drive motor (not shown) is connected to the blowing fan 421, power may be provided to the blowing fan 421. The drive motor may be connected by a wire 422 to a drive motor battery (not shown) that supplies power to the drive motor.

In the present embodiment, the blowing fan 421 and the drive motor are arranged in the exposed space 240 and a gap between the blowing fan 421 and the drive motor arranged in the exposed space 240 may be waterproofed. In other words, since a gap may occur in a connection portion between the blowing fan 421 and the drive motor and rainwater may flow into the exposed space 240 during rain, the gap between the blowing fan 421 and the drive motor may be waterproofed by using a sealing member such as silicon, a waterproof tape, etc.

Since the gap between the blowing fan 421 and the drive motor is arranged in the exposed space 240 by being waterproofed, the external air may blow into the heat sink 410 even outdoors during rain.

In the present embodiment, the drive motor battery is proved in the sealed space 230 as a fixed type and the wire 422 connected between the drive motor and the drive motor battery may be provided by being encompassed by a waterproof flexible tube 423 formed in a tube shape to prevent water from contacting the wire 422. However, the present invention is not limited thereto and the drive motor battery may be of a replaceable type and arranged in the exposed space 240.

Referring to FIG. 5, a casing 600 is coupled to the lower main body 210 and a taking-in hole 610 and a taking-out hole 620 may be formed in the casing 600. The taking-in hole 610 is at least one opening formed to have external air taken into the exposed space 240 during the operation of the blowing unit 420, whereas the taking-out hole 620 is at least one opening formed to have the air having thermally contacted with the heat sink 410 after being taken into the exposed space 240 to be taken outside.

Since the external air that is taken into the exposed space 240 through the taking-in hole 610 is taken outside the exposed space 240 through the taking-out hole 620, the taking-in hole 610 and the taking-out hole 620 may be formed at corresponding positions in the exposed space 240 in the casing 600, as illustrated in FIG. 5.

Referring to FIGS. 2 to 4, the exposed space 240 may be arranged at the edge side of the main body 200. In other words, when the exposed space 240 may be arranged at the edge side of the main body 200, the external air taken into the exposed space 240 through the taking-in hole 610 may be easily taken out through the edge of the main body 200 after passing through the heat sink 410. In this case, the taking-out hole 620 may be formed at a lateral surface of the casing 600 so that the external air taken into the exposed space 240 may be easily taken out.

Referring to FIGS. 2 to 4, the heat sink 410 may be arranged at the edge side of the exposed space 240. The heat sink 410 may be arranged at a position corresponding to the edge side of the exposed space 240 and simultaneously to the edge side of the casing 600. Thus, the external air taken into the exposed space 240 may be easily exhausted to the outside through the edge of the main body 200 after passing through the heat sink 410.

The operation and effect of the portable computer 100 having a heat dissipation structure according to the present embodiment will be described below.

First, when a user uses a portable computer outdoors, in particular, for an industrial use, the portable computer needs to be equipped with a waterproof function considering a usage during rain.

The portable computer 100 includes the heat generation devices 500 such as a CPU or a graphic card in the main body 200. Accordingly, performance of the portable computer 100 may be deteriorated due to heat generated during long time use thereof. To solve this problem, a portable computer is equipped with a heat dissipation device.

However, when heat is dissipated using external air, an opening for taking the external air into the portable computer is formed in the portable computer. When the portable computer is used outdoors during rain, rainwater may intrude into the portable computer through the opening formed in the portable computer.

A CPU, a memory, a battery for supplying electric power, a graphic card, etc. are mounted on a main board in the main body 200 and connected to one another by circuits. When rainwater intrudes into the various parts mounted on the main board, the various parts or a circuit board may malfunction.

However, in the portable computer 100 having a heat dissipation structure according to the present embodiment, the sealed space 230 and the exposed space 240 are separated from each other and the main board on which the CPU, the memory, the battery for supplying electric power, the graphic card, etc. are mounted is arranged in the sealed space 230 that is waterproofed.

Also, the heat transfer unit 300 arranged in the sealed space 230 is connected to the heat sink 410 and the heat generation devices 500 such as the CPU, the graphic card, etc. and transfers the heat generated from the heat generation devices 500 to the heat sink 410 arranged in the exposed space 240.

The heat dissipation unit 400 including the heat sink 410 and the blowing unit 420 is arranged in the exposed space 240 and the external air circulates in the exposed space 240 only for heat dissipation and is not taken into the sealed space 230. Accordingly, the open gin for passing the external air in and out of the main body 200 is not formed and it is not likely that water intrudes into the main body 200.

Thus, in the portable computer 100 having a heat dissipation structure according to the present embodiment, the intrusion of water into the main body may be prevented and simultaneously the heat generated by the heat generation devices may be efficiently dissipated. Thus, the portable computer may be used even in an inferior outdoor environment during rain.

While the inventive concept has been particularly shown and described with reference to exemplary embodiments thereof, it will be understood that various changes in form and details may be made therein without departing from the spirit and scope of the following claims.

## Claims

1. A portable computer having a heat dissipation structure, the portable computer comprising:
a main body in which a heat generation device generating heat is arranged, wherein a sealed space that is sealed to prevent intrusion of external water and an exposed space into which external air is taken;
a heat transfer unit connected to the heat generation device and extended to the exposed space in the sealing space of the main body and transferring the heat of the heat generation device to the exposed space; and
a heat dissipation unit arranged in the exposed space of the main body and dissipating the heat transferred by the heat transfer unit.

2. The portable computer of claim 1, wherein the main body comprises:
a lower main body;
an upper main body detachably coupled to the lower main body, forming the sealed space; and
a waterproof unit coupled to the lower main body and the upper main body and preventing intrusion of external water into the sealed space when the lower main body and the upper main body are coupled to each other.

3. The portable computer of claim 2, wherein the exposed space is provided to be sunken from a lower surface of the lower main body by a predetermined depth, and the main body further comprises a partition wall body that partitions the exposed space and the sealed space.

4. The portable computer of claim 3, wherein the partition wall body is formed on the lower main body.

5. The portable computer of claim 2, wherein the waterproof unit comprises at least one of a waterproof tape coupled between the lower main body, the upper main body, and the heat transfer unit and a waterproof rubber of a rubber material coupled between the lower main body, the upper main body, and the heat transfer unit.

6. The portable computer of claim 1, wherein the heat dissipation unit comprises a heat sink connected to the heat transfer unit and having at least one of heat dissipation members for receiving heat from the heat transfer unit and dissipating the heat to the outside.

7. The portable computer of claim 6, wherein the heat dissipation unit further comprises a blowing unit including a blowing fan that is arranged in an area close to the heat sink and blows air to the heat sink to dissipate the heat transferred from the heat transfer unit to the heat sink to the outside.

8. The portable computer of claim 7, wherein the heat transfer unit is a heat pipe connected to each of the heat generation device and the heat sink.

9. The portable computer of claim 7, further comprising:
a drive motor providing power to the blowing fan; and
a drive motor battery supplying electric power to the drive motor,
wherein the drive motor is arranged in the exposed space and the drive motor battery is arranged in the sealed space.

10. The portable computer of claim 9, further comprising a wire connecting the drive motor and the drive motor battery,
wherein the wire is surrounded by a flexible tube having a tube shape to prevent water from contacting the wire.

11. The portable computer of claim 7, further comprising a casing,
wherein at least one taking-in hole formed to have external air taken into the exposed space and at least one taking-out hole formed to have the external air taken into the exposed space taken to the outside are formed in the casing.

12. The portable computer of claim 7, wherein the heat sink is arranged at an edge side of the exposed space to facilitate the external air passing through the heat sink to be taken to the outside by the blowing unit.

13. The portable computer of claim 1, being a tablet personal computer (PC).

14. The portable computer of claim 1, wherein the exposed space is arranged at an edge side of the main body so that the air taken into the exposed space is easily taken to the outside.
